# EUROPEAN PATENT APPLICATION

(11) **EP 1 829 820 A1**
(43) Date of publication of application: **05.09.2007**
(21) Application number: 06110007.9
(22) Date of filing: 16.02.2006
(51) Int. Cl.: C01B 3/06, C01B 3/08

(54) **Method for obtaining hydrogen**

(71) Applicant: Sociedad española de carburos metalicos, S.A., 08009 Barcelona (ES)
(72) Inventor: Golden, Timothy C., Allentown, 18195-1501 (US); Soler Turu, Lluís Departament de Química, Facultad de Ciències 08193,Bellaterra (ES); Macanás de Benito, Jorge Departament de química, Facultat de ciències 08193, Bellaterra (ES); Muñoz Tapia, María Departament de Química, Facultat de Ciències, 08193 Bellaterra (ES); Casado Jiménez, Juan, Edificio Matgas, 08193 Bellaterra (ES)
(74) Representative: Ponti Sales, Adelaida

(57) **Abstract**

The present invention provides a new method for obtaining hydrogen gas that comprises the stages of providing aluminium and/or at least one aluminium alloy; providing at least one hydride of general formula (I), where X is selected between B and Al; Y is selected from among Li, Na, K, Mg, Ca and Al; and n is an integer number from 1 to 3; providing an aqueous medium; and combining the preceding stages in any order to produce hydrogen gas and other reaction products with good yields.

## Description

### FIELD OF THE INVENTION

The object of the present invention is to provide a method for producing hydrogen with high yields that is also profitable and viable at industrial scale.

In particular, the present invention relates to a new method for obtaining hydrogen gas based on the reaction of one or more alanates and/or one or more borohydrides and aluminium and/or at least one aluminium alloy in an aqueous medium.

### BACKGROUND OF THE INVENTION

Hydrogen is the simplest element known. It is the most abundant gas in the universe and accounts for more than the thirty per cent of the mass of the sun.

Under normal conditions, pure hydrogen is a gas formed by diatomic molecules (H₂). This gas is not found on Earth in significant amounts in free form but it is found bonded with other elements. Combined with oxygen it gives rise to water (H₂O), and with carbon to hydrocarbons such as methane (CH₄) or to mixtures of hydrocarbons such as petroleum.

Due to its high efficiency and zero pollution, hydrogen is one of the most promising alternative fuels. It can be used in locomotion, in heat generation and in electricity generators (fuel cells) in places not reached by the electricity network.

Hydrogen can be obtained by various methods. Most of the processes used nowadays for producing hydrogen are based on the use of fossil fuels.

Also known are methods for obtaining hydrogen on the basis of aluminium and/or aluminium alloys by reaction in acid or base aqueous medium.

Thus, United States patent US 2003/0143155 discloses a method for obtaining hydrogen gas by the reaction of aluminium with water in the presence of sodium hydroxide, which acts as a catalyst. Preferably, said reaction takes place at temperatures ranging between 4°C and 170°C. In accordance with said US patent, one of the following reactions or a combination thereof takes place:

2 Al + 3 H₂O -> Al₂O₃ + 3 H₂ (1)

2 Al + 6 H₂O -> Al₂(OH)₃ + 3 H₂ (2)

However, the last reaction must be erroneous because its stoichiometry is incorrect and Al₂(OH)₃ is an unknown product.

Furthermore, international patent application WO 92/02935 discloses a method for generating hydrogen in a controlled manner from a material in powder form. The generation of hydrogen is controlled by using an aluminium alloy in powder form. The utilisation of a compound with metallic aluminium matrix permits the corrosion of said compound to produce hydrogen with consumption of certain products such as oxygen, to leave a non-explosive mixture of hydrogen and nitrogen in the reaction vessel. Said compound is a laminate of aluminium and a matrix based on metallic aluminium containing 30% boron carbide.

In some of these processes, aluminium or alloys thereof are mixed with various forms of aluminium oxide in order to increase the speed of hydrogen production.

There are also processes for producing hydrogen from chemical hydrides in aqueous medium, in which the presence of catalysts such as inorganic acids or salts are necessary for the processes to run correctly.

Thus, for example, US patent 2001022960 relates to a method for generating hydrogen by hydrolysation of a complex metal hydride in the presence of water and a catalyst, in which the catalyst includes a noble metal and a metallic oxide, a metalloid oxide or a carbonaceous material.

United States patent US 2003162059 discloses a method for generating hydrogen on the basis of exothermic and endothermic reactions. In particular, the exothermic reaction is produced by reaction of a sodium borohydride in an aqueous solution in the presence of a catalyst. The following reaction takes place:

NaBH₄ + 2 H₂O -> NaBO₂ + 4 H₂ (3)

United States patent US 2004018145 relates to the generation of hydrogen from chemical hydrides in aqueous medium and in the presence of a catalyst. In particular, said patent discloses a method for obtaining hydrogen at high pressure, which includes bringing the water into contact with a hydrogen-generating material. Said hydrogen-generating material is an aggregate that includes at least particles of magnesium or particles of hydrogenated magnesium, in which said aggregate contains on its surface small particles of fine metal that act as a catalyst of the reaction for generating hydrogen. The objective of this process is to obtain hydrogen at high pressure.

Moreover, international patent application WO 2004035464 describes a piece of equipment for generating hydrogen based on the decomposition of a hydride in the presence of a catalyst. In particular, said document describes more effective equipment with lower environmental impact for storing hydrogen.

United States patent application US 2005047994 also describes compositions useful for storing hydrogen. In particular, it discloses a method for reversibly producing a source of hydrogen gas from the mixture of a hydride and an amide. When the hydride is heated in the presence of said amide, hydrogen is released and a residue is formed that includes imide, which upon exposure to the hydrogen reverts to the amide.

However, the methods that produce hydrogen from hydrides with good yields are nowadays expensive. On the other hand, the methods for hydrogen generation from aluminium have low yields in terms of weight percentage of gas obtained vs. reagents consumed (<4%).

### SUMMARISED DESCRIPTION OF THE INVENTION

The present invention provides a method for obtaining hydrogen gas in a profitable and efficient way and with good yields.

In accordance with the method of this invention aluminium and/or at least one aluminium alloy and at least one hydride are provided as reagents, together with an aqueous medium. The combination thereof permits hydrogen to be obtained with high yields.

Surprisingly and unexpectedly, the reagents used in the method of the invention lead to the production of hydrogen with yields that are higher than the addition of the hydrogen obtained from any of the reagents separately.

In particular, the method of the present invention is based on the reaction between a type of hydride selected from among alanate and/or borohydride with aluminium and/or an aluminium alloy in an aqueous medium that can be water or can contain a base in solution.

Advantageously, it has been observed that in accordance with the method of the invention the utilisation of aluminium and/or aluminium alloys as reagents in conjunction with a hydride in the reaction for obtaining hydrogen not only reduces the cost of the starting products, but their presence also speeds up the reaction between the various reagents that take part in producing hydrogen. This may be due to the aluminium (or the aluminium alloy) present in the reaction medium, which is not only participating as a reagent but also acting as a catalyst of the reaction between the hydride and the aqueous medium.

It is furthermore well-known that the hydrides are compounds that are substantially more expensive than aluminium and/or certain alloys of aluminium.

Advantageously, with the method of the invention for obtaining hydrogen, hydrogen gas is generated with high yields and at lower cost, due mainly to the lower cost of the starting reagents and the increased yield of the method. Moreover, the evolving hydrogen is also obtained with an increased reaction rate.

There follows below a more detailed description of the invention to put into practice the method defined in the attached claims.

### FIGURES

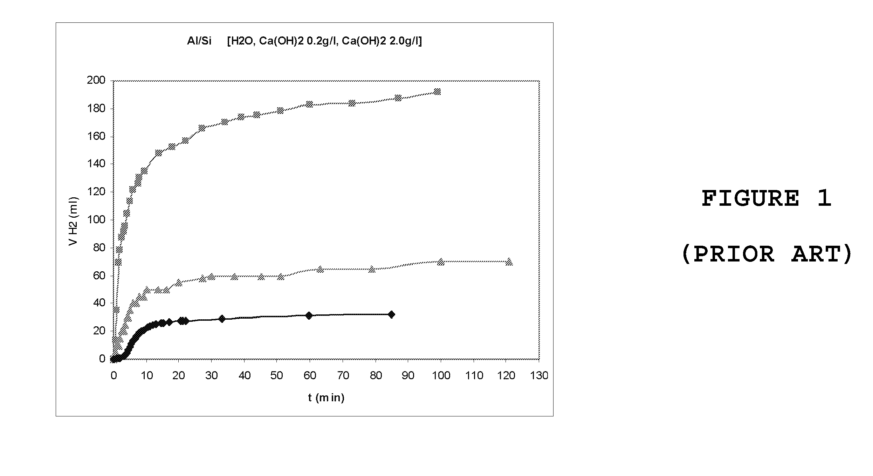

Figure 1 shows the evolution of hydrogen gas (volume in ml) obtained from 0.210g of an Al/Si alloy, in which the medium is water at 75°C (-◆-), water with 0.2g/l of Ca(OH)₂ at 75°C(-▲-) and water with 2.0g/l of Ca(OH)₂ at 75°C(-•-). Said figure describes hydrogen being obtained from the state of the art prior to the present invention.

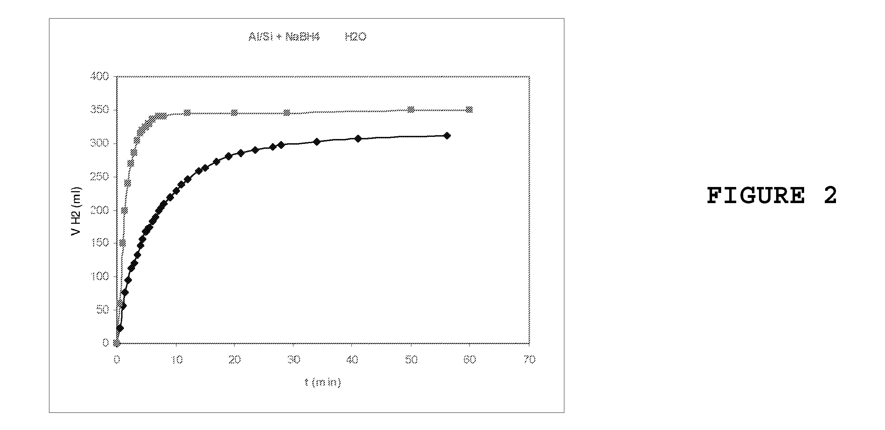

Figure 2 shows the evolution of hydrogen gas (ml) obtained from a mixture of 0.210g of an Al/Si alloy and 0.103g of NaBH₄ (-•-), in which the medium is water at 75°C, when compared with the addition (-◆-) of hydrogen gas obtained using 0.210g of an Al/Si alloy and hydrogen gas obtained using 0.103g of NaBH₄ separately.

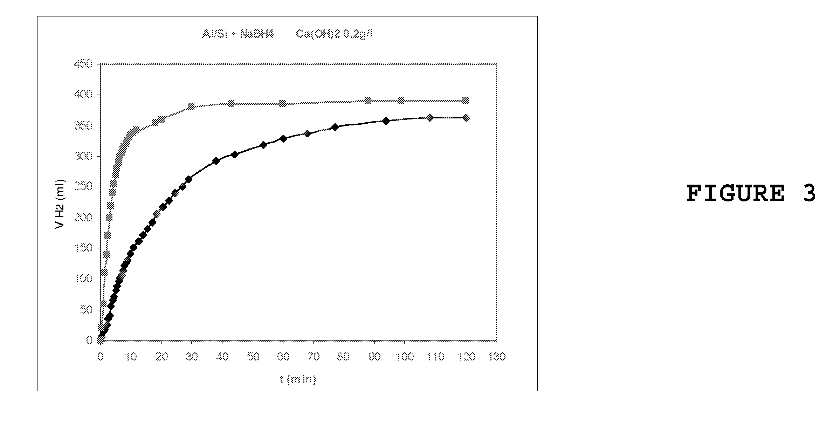

Figure 3 shows the evolution of hydrogen gas (ml) obtained from a mixture of 0.219g of an Al/Si alloy and 0.107g of NaBH₄ (-•-), in which the medium is water with 0.2g/l of Ca(OH)₂ at 75°C, when compared with the addition (-◆-) of hydrogen gas obtained using 0.219g of an Al/Si alloy and hydrogen gas obtained using 0.107g of NaBH₄ separately.

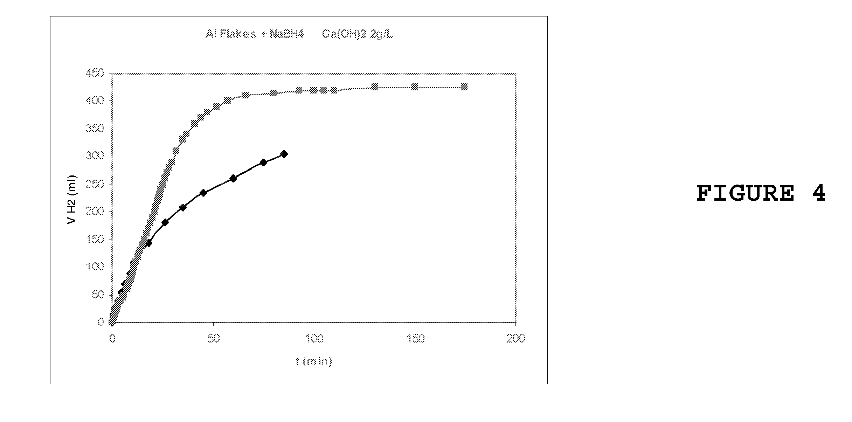

Figure 4 shows the evolution of hydrogen gas (ml) obtained from a mixture of 0.209g of aluminium flakes and 0.120g of NaBH₄ (-•-), in which the medium is water with 2.0g/l of Ca(OH)₂ at 75°C, when compared with the addition (-◆-) of hydrogen gas obtained using 0.209g of aluminium flakes and hydrogen gas obtained using 0.120g of NaBH₄ separately.

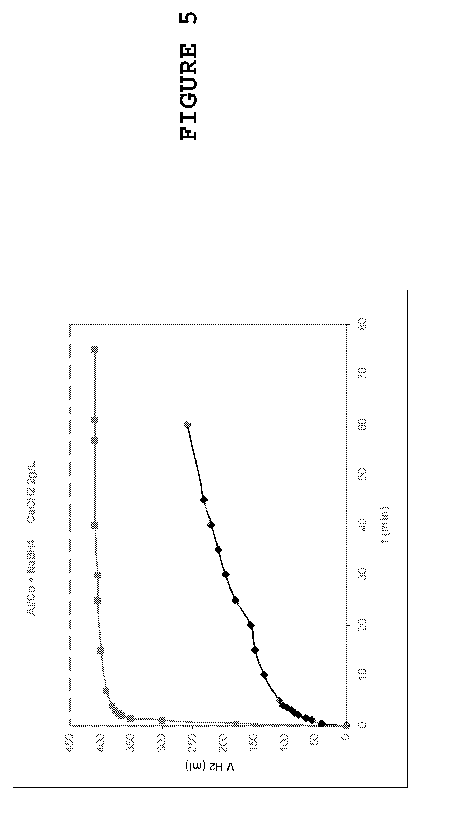

Figure 5 shows the evolution of hydrogen gas (ml) obtained from 0.219g of an Al/Co alloy and 0.114g of NaBH₄ (-•-), in which the medium is water with 2.0g/l of Ca(OH)₂ at 75°C, when compared with the addition (-◆-) of hydrogen gas obtained using 0.219g of an Al/Co alloy and hydrogen gas obtained using 0.114g of NaBH₄ separately.

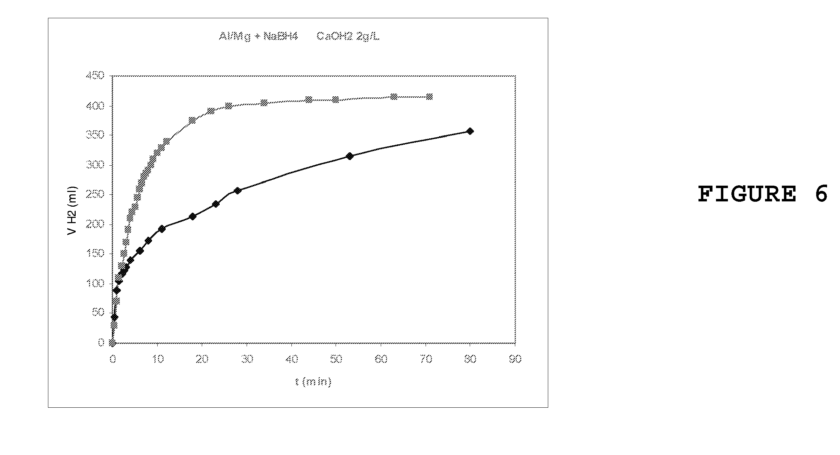

Figure 6 shows the evolution of hydrogen gas (ml) obtained from a mixture of 0.215g of an Al/Mg alloy and 0.102g of NaBH₄ (-•-), in which the medium is water with 2.0g/l of Ca(OH)₂ at 75°C, when compared with the addition(-◆-) of hydrogen gas obtained using 0.215g of an Al/Mg alloy and hydrogen gas obtained using 0.102g of NaBH₄.

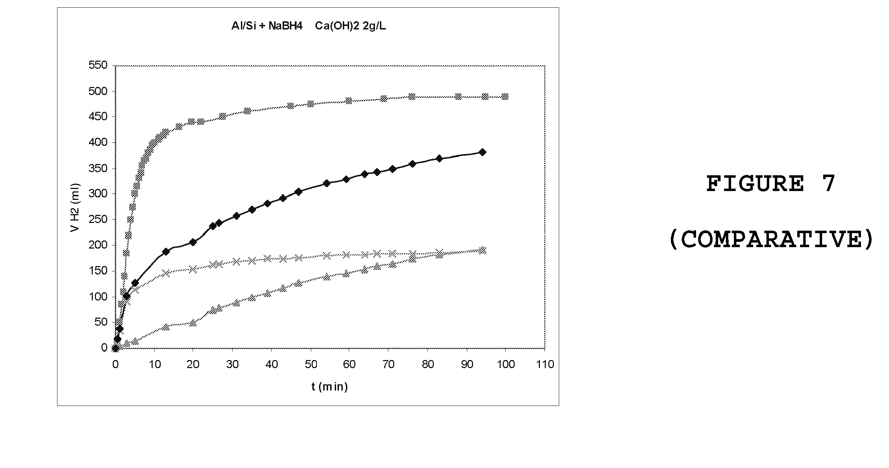

Figure 7 shows the evolution of hydrogen gas (ml) obtained from a mixture of 0.210g of an Al/Si alloy and 0.109g of NaBH₄ (-•-), in which the medium is water with 2.0g/l of Ca(OH)₂ at 75°C, when compared with the addition (-◆-) of hydrogen gas obtained using 0.210g of an Al/Si alloy and hydrogen gas obtained using 0.109g of NaBH₄, and both evolutions of hydrogen gas separately: Al/Si (-×-) and NaBH₄ (-▲-).

### DETAILED DESCRIPTION OF THE INVENTION

There follows a more detailed description of the present invention with reference to the figures included.

The objective of the method of the present invention is to produce hydrogen gas with high yields and at lower cost.

In accordance with the first aspect of the invention, a method of obtaining hydrogen is carried out that includes the stages of:
i) providing aluminium and/or at least one aluminium alloy;
ii) providing at least one hydride of general formula (I):

   Y[XH₄]ₙ

   where X is selected between B and Al; Y is selected from among Li, Na, K, Mg, Ca and Al; and
   n is an integer number from 1 to 3;
iii) providing an aqueous medium; and
iv) combining stages i), ii) and iii) in any order for producing hydrogen gas and other reaction products.

In accordance with the method of the invention, the combination of stages i), ii) and iii) can be carried out in any order. However, and for the purpose of obtaining the best yields in the process, it is preferable to mix the aluminium and/or at least one aluminium alloy with at least one hydride of general formula (I) and then add the mixture of reagents to the reaction medium so that hydrogen gas is formed.

When both types of reagents are present in the reaction medium the yield of hydrogen gas obtained is surprisingly higher.

It is believed that the aluminium and/or at least one aluminium alloy present in the mixture for obtaining hydrogen gas not only acts as a reagent but also catalyses the reaction between the hydride and the medium, thereby increasing the reaction rate between the reagents for obtaining hydrogen gas.

Surprisingly, the authors of the present invention have found that the reagents used in the method of the invention lead to hydrogen being obtained with yields significantly higher than when hydrogen gas is produced from each of the reagents separately, as can be appreciated especially from the attached comparative figure 7, in which the addition (-◆-) of the volumes of hydrogen obtained from an aluminium alloy (-×-) or the volumes of hydrogen obtained from a hydride (-▲-) is substantially lower than the evolution of hydrogen gas in accordance with the method of the invention (-•-), with all of them in the same aqueous medium.

Advantageously, said aluminium alloy is selected from among Al/Si, Al/Co and Al/Mg. However, other aluminium alloys or mixtures of them with or without pure aluminium may be used in the method of the invention.

In accordance with the method defined in the attached claims, the aqueous medium in which the reaction for obtaining hydrogen gas takes place can be water, an aqueous medium that contains a base or a mixture of bases in aqueous solution. The base used can be any available to an expert in the subject, although a base selected from among Ca(OH)₂, NaOH, KOH and mixtures thereof is preferred.

The authors of the present invention have found better yields in obtaining hydrogen when the medium contains a base in solution, and preferably Ca(OH)₂, NaOH or KOH, while the concentration of said bases in the medium can vary up to saturation for Ca(OH)₂, and up to 5M for NaOH or KOH.

Advantageously, according to the method of the invention an alkaline medium increases the hydrogen production rate, so that that it is preferable to have a base present in the reaction medium, and more preferably still Ca(OH)₂ up to saturation. For example, Figures 3 and 7, in which the concentration of aluminium alloy and hydride is practically the same, show that an increase in concentration of Ca(OH)₂ also brings increased production of hydrogen.

As it is known, the corrosion reaction of aluminium generates hydrogen and heat, with consumption of water in accordance with the reaction:

2Al + 6H₂O → 2Al (OH)₃↓ + 3H₂↑ (4)

Obtaining hydrogen gas with the method of the invention therefore provides the heat needed to carry out the reaction described above within a suitable temperature margin (60-90°C) and for an acceptable hydrogen output flow. In consequence, it is not necessary to heat the alkaline solution of the reaction externally once the reaction has started, since it is an exothermic process, which makes the method more economical still.

The present invention nevertheless provides for a reaction temperature ranging between 4 and 300°C, preferably between 50 and 100°C. Under certain circumstances it can be beneficial to apply heat externally to the described exothermic process.

Advantageously, the percentage of aluminium expressed in weight in relation to the total of solid reagents that take part in the reaction, that is, aluminium and/or aluminium alloy and the hydride, lies between 25% and 95% by weight, preferably between 50 and 80% by weight.

Thus, the percentage of aluminium can range between 25 and 95% by weight in relation to the total weight of the starting reagents, with high concentrations of aluminium in the mixture of reagents being preferable in order to reduce the cost of the initial products, due to the high cost of the hydrides, and in order to increase the speed of reaction for obtaining hydrogen due to the catalytic effect that aluminium is believed to produce in the reaction of hydrides with water.

The form in which said initial reagents are found is therefore also important, being preferably in the form of powder, flakes, pellets, monoliths, granules or foils. and more preferably still in the form of powder, since this is the form that offers the largest surface area exposed to the reaction medium.

The present invention encompasses all variants that an expert in the subject can implement without thereby departing from the sphere of protection of the present invention as defined in the method of obtaining hydrogen gas according to claim 1.

### PREFERRED EMBODIMENTS OF THE INVENTION

In accordance with the state of the art prior to the present invention (see Figure 1 attached) an increase in the concentration of the base in dissolution in the medium in which the reaction for obtaining hydrogen takes place is the key for obtaining better yields.

However, the method of the present invention has revealed that although the presence of a base improves the yield of the reaction, the yields obtained in an aqueous medium that contains only water (see Figure 2) are substantially higher than the addition of the hydrogen amounts evolved in the individual reactions of hydride and aluminium alloy.

The synergistic effect obtained in accordance with the method of the invention in relation to the addition of the two reactions described in the state of the art separately can be observed on the basis of the results shown in Figure 2. Figure 7, likewise, shows said results more clearly still when the reaction medium is an alkaline solution. Said Figure 7 shows the surprising results obtained in accordance with the invention when compared with the prior art.

As described above, the presence of the base in the aqueous reaction medium is beneficial for the method of obtaining hydrogen of the present invention. Thus, a comparison of Figure 3 and Figure 7 allows a greater production of hydrogen to be observed in an alkaline medium. The addition of a base to the reaction medium is therefore advantageous for the purpose of obtaining higher yields.

The authors of the present invention prove that in an alkaline aqueous medium the evolution of hydrogen gas production is viable independently of the type of aluminium used as reagent. A comparison of Figures 4, 5, 6 and 7 thus allows it to be affirmed that aluminium and various alloys of aluminium are good candidates for hydrogen production, as long as the other requirements defined in claim 1 attached are fulfilled.

Included below are some examples by way of non-restrictive illustration of the invention.

### EXAMPLES

### EXAMPLE 1

0.210g of aluminium/silicon alloy (Al/Si) powder (Alfa Aesar, Al:Si;88:12 wt%, -325 mesh, 99% purity) were mixed with 0.103g of sodium borohydride (NaBH₄) powder (Panreac, 96%). The mixture was placed in a 100 ml Pyrex glass reactor containing 75ml of distilled water. The reactor was heated with a water bath to maintain a constant temperature of 75°C. The hydrogen production reaction started when the solid mixture came into contact with the aqueous solution. The hydrogen produced by the reaction emerged from the reactor through a Tygon tube of 40cm length and 3mm internal diameter, was passed through a water bath at ambient temperature in order to condense the water vapour, and was collected in an inverted test tube in order to measure the quantity of hydrogen produced.

The reaction ended with a total production of 350 ml of hydrogen. This quantity of hydrogen indicated a yield of 69% (quantity of hydrogen produced divided by the theoretical quantity of hydrogen according to the quantity of alloy and hydrides added in accordance with reactions (3) and (4)). The final pH was 9.8.

An experiment under the same conditions was carried out using a mixture of 0.219g of an Al/Si alloy and 0.107g of NaBH₄ in 75 ml of an aqueous solution of Ca(OH)₂ 0.2g/L at 75°C. The reaction ended with a total hydrogen production of 390 ml, which amount corresponds to a yield of 74%. The final pH was 9.8.

A third experiment was carried out using a mixture of 0.210g of an Al/Si alloy and 0.109g of NaBH₄ in 75 ml of a saturated aqueous solution of Ca(OH)₂ at 75°C. In this case the reaction ended with a total hydrogen production of 490 ml, which corresponds to a yield of 94%. The final pH was 11.3.

The synergistic effect of the systems with Al/Si alloy and NaBH₄ can be observed in attached Figures 2, 3 and 7. The reagents used in each case led to the production of hydrogen with flows and yields clearly higher than the addition of hydrogen obtained on the basis of the Al/Si alloy and the NaBH₄ separately, also shown in said Figures. Advantageously, the increased concentration of calcium hydroxide in the aqueous solution led to increased hydrogen production yields.

### EXAMPLE 2

0.209g of aluminium flakes (Aldrich, 1.0mm particle size, 99.99% purity) were mixed with 0.120g of NaBH₄ powder (Panreac, 96%). The mixture was placed in a reactor containing 75 ml of saturated solution of calcium hydroxide at a constant temperature of 75°C.

The reaction ended with a total hydrogen production of 425 ml and 73% yield in the production of hydrogen. The final pH was 11.7.

The synergistic effect of the systems with aluminium and NaBH₄ can be observed in attached Figure 4. The combination of aluminium flakes with NaBH₄ led to the production of hydrogen at velocities and with yields higher than the addition of the hydrogen obtained using aluminium flakes and NaBH₄ separately, also shown in the same Figure.

### EXAMPLE 3

0.220g of aluminium/cobalt alloy (Al/Co) powder (Alfa Aesar, Al:Co;69:31 wt%, -100 mesh, 99% purity) were mixed with 0.114g of powder of NaBH₄ (Panreac, 96%). The mixture was placed in a reactor containing 75 ml of saturated solution of calcium hydroxide at a constant temperature of 75°C.

The reaction ended with a total production of 510 ml of hydrogen, and a yield of 85% was obtained. The final pH was 11.1.

The synergistic effect of the systems with Al/co alloy and NaBH₄ can be observed in attached Figure 5. The reagents used lead to the production of hydrogen with flows and yields significantly higher than the addition of the hydrogen obtained from the alloy of Al/Co and the NaBH₄ separately, also shown in the same figure.

### EXAMPLE 4

0.215g of aluminium/magnesium (Al/Mg) alloy powder (Goodfellow, Al:Mg;92.1:7.9 wt%, 63 microns) were mixed with 0.102g of powder of NaBH₄ (Panreac, 96%). The mixture was placed in a reactor containing 75 ml of saturated solution of calcium hydroxide at a constant temperature of 75°C.

The reaction ended with a total production of 415 ml of hydrogen, an amount that corresponds to a yield of 79%. The final pH was 10.7.

The synergistic effect of the systems with Al/Mg alloy and NaBH₄ can be observed in attached Figure 6. The reagents used led to the production of hydrogen with rates and yields clearly higher than the addition of hydrogen obtained from the Al/Mg alloy and NaBH₄ separately, also shown in the same figure.

### EXAMPLE 5

0.316g of Al/Si alloy powder (Alfa Aesar, Al:Si;88:12 wt%, -325 mesh, 99% purity) were mixed with 0.102g of lithium alanate (LiAlH₄, Fluka, 97%). The mixture was placed in a 100 ml Pyrex glass reactor at a temperature of 25°C. A solution of 75ml of potassium hydroxide 0.1M at 25°C was added to the reactor, fitted with a compensated-pressure addition funnel.

The reaction ended with a total production of 380 ml of hydrogen. This quantity of hydrogen indicated a yield of 60%. The final pH was 12.7.

## Claims

1. A method for obtaining hydrogen gas, **characterised in that** it comprises the stages of:
i) providing aluminium and/or at least one aluminium alloy;
ii) providing at least one hydride of general formula (I):
Y[XH₄]ₙ
where X is selected between B and Al; Y is selected from among Li, Na, K, Mg, Ca and Al; and
n is an integer number from 1 to 3;
iii) providing an aqueous medium; and
iv) combining stages i), ii) and iii) in any order to produce hydrogen gas and other reaction products.

2. Method according to claim 1, **characterised in that** said aluminium alloy is selected from among Al/Si, Al/Co and Al/Mg.

3. Method according to claim 1, **characterised in that** said aqueous medium is water.

4. Method according to claim 1, **characterised in that** said aqueous medium is prepared by dissolving a base in water.

5. Method according to claim 4, in which said base is selected from Ca(OH)₂, NaOH, KOH and mixtures thereof.

6. Method according to claim 5, in which the Ca(OH)₂ is in any concentration up to saturation.

7. Method according to claim 5, in which the NaOH is in a concentration of up to 5M.

8. Method according to claim 5, in which the KOH is in a concentration of up to 5M.

9. Method according to claim 1, **characterised in that** the reaction takes place at a temperature between 4 and 300°C.

10. Method according to claim 9, in which the temperature is between 50 and 100°C.

11. Method according to claim 1, **characterised in that** the percentage of aluminium in relation to the compounds provided in stages i) and ii) is between 10% and 95% by weight.

12. Method according to claim 11, in which the percentage of aluminium is between 20 and 70% by weight.

13. Method according to claim 1, **characterised in that** the compounds provided in stages i) and ii) are in the form of powder, flakes, pellets, monoliths, granules or foils.

14. Method according to claim 13, in which the compounds provided in stage i) are in powder form.

15. Method according to claim 13, in which the compounds provided in stage ii) are in powder form.

## Amended claims

### Amended claims in accordance with Rule 86(2) EPC.

**1.** A method for obtaining hydrogen gas, **characterised in that** it comprises the stages of:
i) providing at least one aluminium alloy;
ii) providing at least one hydride of general formula (I) :
Y[XH₄]ₙ
where X is selected between B and Al; Y is selected from among Li, Na, K, Mg, Ca and Al; and n is an integer number from 1 to 3; and
iii) providing an aqueous medium; so that the reaction between said aluminium alloy with said hydride in said aluminium out at a temperature between 4 and 300°C to produce hydrogen gas and other reaction products.

**2.** Method according to claim 1, **characterised in that** said aluminium alloy is selected from among Al/Si, Al/Co and Al/Mg.

**3.** Method according to claim 1, **characterised in that** said aqueous medium is water.

**4.** Method according to claim 1, **characterised in that** said aqueous medium is prepared by dissolving a base in water.

**5.** Method according to claim 4, in which said base is selected from Ca(OH)₂, NaOH, KOH and mixtures thereof.

**6.** Method according to claim 5, in which the Ca(OH)₂ is in any concentration up to saturation.

**7.** Method according to claim 5, in which the NaOH is in a concentration of up to 5M.

**8.** Method according to claim 5, in which the KOH is in a concentration of up to 5M.

**9.** Method according to claim 1, in which the temperature is between 50 and 100°C.

**10.** Method according to claim 1, **characterised in that** the percentage of aluminium in relation to the compounds provided in stages i) and ii) is between 10% and 95% by weight.

**11.** Method according to claim 10, in which the percentage of aluminium is between 20 and 70% by weight.

**12.** Method according to claim 1, **characterised in that** the compounds provided in stages i) and ii) are in the form of powder, flakes, pellets, monoliths, granules or foils.

**13.** Method according to claim 12, in which the compounds provided in stage i) are in powder form.

**14.** Method according to claim 12, in which the compounds provided in stage ii) are in powder form.
